# EUROPEAN PATENT APPLICATION

(11) **EP 4 835 777 A1**
(43) Date of publication of application: **04.11.2026**
(21) Application number: 25173214.5
(22) Date of filing: 29.04.2025
(51) Int. Cl.: G06Q 20/06, G06Q 20/32, G06Q 20/40

(54) **TERMINAL DEVICE, ELECTRONIC PAYMENT TRANSACTION SYSTEM AND METHOD**

(71) Applicant: Giesecke+Devrient advance52 GmbH, 81677 München (DE)
(72) Inventor: HUPEL, Lars, 81677 München (DE)
(74) Representative: Ter Meer und Partner mbB

(57) **Abstract**

Provided is a terminal device for participating in an electronic payment transaction system. The terminal device comprises a secure hardware unit including a token storage and a control unit that is configured to participate in a token transaction. The terminal device comprises a storage unit for storing a lossy compressed list of list elements, wherein each list element indicates a blocked secure hardware unit within the electronic payment system. The terminal device comprises a processing unit that is operatively coupled with the secure hardware unit. The processing unit is configured, before or during a token transaction with a further secure hardware unit within the electronic payment system, to determine whether the further secure hardware unit is marked as blocked based on a list element, preferably hash value, within the lossy compressed list. The processing unit is further configured, in case the further secure hardware unit is marked as blocked, to determine a risk value for executing the token transaction with the further secure hardware unit, and to execute the token transaction if the risk value is determined to be acceptable.

## Description

The present invention relates to a terminal device for an electronic payment transaction system, an electronic payment transaction system and a corresponding method.

Tokens - also referred to as digital assets, electronic coins, coin data sets - may represent any digital asset, in particular a digital currency, preferably a central bank digital currency, short CBDC. These tokens are issued and deleted by a unit of the transaction system, such as an issuing authority, or a central bank unit or a commercial bank unit, hereinafter also referred to as secure token issuing unit.

Electronic token transactions and/or storage of tokens and any associated transaction data and/or storage data must be safe and secure and so, means for protecting confidentiality, integrity, and availability of exchanged and/or stored token data must be implemented. This is true for electronic payment transactions and associated payment transactions and payment storages in which a monetary value is linked with each token, subsequently also referred to as a token value.

There are different technical approaches for a digital asset e.g., digital currency such as central bank digital currency, CBDC, issued by a central bank.

According to a first approach, tokens are merely cryptographically secured by the central bank unit and the cryptographically secured tokens are exchanged directly between token management units - also referred to as wallets - of the participants in an encrypted manner. The exchanged token may also be stored in an encrypted manner. The token management units can verify the authenticity of the tokens based on the cryptographic security, such as keys and signatures, and for example checks a certificate from the central bank and/or the other token management units for validity within the certificate hierarchy in advance via online access or following the offline-protocol of the system.

According to a second approach, tokens are stored in a centralized or decentralized blockchain/distributed ledger of the transaction system, e.g., organized by a central bank unit. For a transaction, an ownership of a token record changes in the blockchain for which a lot of information (sender/recipient/amount) is required and/or even published. Sender and recipient of the token need an online access to the blockchain at the time of the transaction.

According to a favorable third approach as for instance described in WO 2020 / 212 331 A1 or WO 2023 / 036 458 A1 tokens are stored in a local token management unit to be directly exchanged between participants of an electronic payment transaction system. The transferred token can validly be used after receipt from another participant without a need of approval or verification via an online connection. So, if an online connection is not available or inconvenient or should not be used for a specific token transaction, it remains possible to validly transfer tokens directly between participants in the electronic payment transaction system. For security-, verification- and registration-purposes, a token register stores token references of all valid tokens without knowing the tokens itself. So, the user can check validity of a received token. The token register only stores token references of the corresponding token. Tokens can be switched, split or merged by each individual participant, e.g., ownership of tokens can be switched from one participant to another participant, tokens can be split into plural tokens, e.g., for obtaining a token with a reduced monetary value and/or plural tokens can be merged to a single token, e.g., for obtaining a token with a higher monetary value.

Each participant in the electronic payment transaction system according to the third approach comprises a transaction unit or token management unit that is assigned to him. Each of these transaction units enable a high standard for security, confidentiality and safety regarding payment transactions and are therefore referred to as secure transaction units. The transaction unit is also known as wallets or token-wallets.

A wallet can be provided as a hardware wallet, e.g. as a smart card issued to a participant, or can be a so-called hosted-wallet, e.g. a wallet that is hosted by the individual service provider. A wallet may be hosted in a terminal device.

Electronic token transactions and/or storage of tokens and any associated transaction data and/or storage data in an electronic token transaction system must be safe and secure and so, means for protecting confidentiality, integrity, and availability of exchanged and/or stored token data must be implemented. This is especially true for electronic payment transactions and associated payment transactions and payment storages in which a monetary value is linked with each token.

Occasionally, wallets need to be blocked, e. g., when lost or stolen. Every participant in the electronic payment transaction system at least needs to have a possibility to find out if a wallet (partner wallet) participating in a payment transaction is actually blocked. Therefore, a blacklist of blocked wallets is established in the electronic payment transaction system, which may be called to check whether a given wallet ID is blocked. However, this check requires an online connection of the wallet or terminal device including the wallet (online verification).

To enable wallets that are offline to also perform such verification of a partner wallet, the blacklist is provided to the wallets. Due to strict memory limitations, the blacklist usually is compressed, e. g., by storing the wallet IDs of blocked wallets in a Bloom filter or the like. This compression has the drawback that it generates false positives, e. g., the Bloom filter may coincidentally contain elements, e .g., hash values, that correspond to a wallet ID that is actually not blocked. As a result of the verification, the wallet is configured to abort the payment transaction if the check reveals that the partner wallet of the payment transaction is seemingly blocked. Thus, in an offline scenario, payment transactions may be denied or aborted due to false positives arising from a lossy compression of the blacklist. A false positive may result in a loss of revenue for a merchant, because the customer cannot make a payment.

Hence, there is a need to provide a terminal device for an electronic payment transaction which is configured to reduce the number of cancellations of payment due to false positive indicated blocked wallets. Moreover, there is a need to provide a corresponding payment transaction method.

The above-identified objectives are solved with the features of the independent patent claims. Further advantageous embodiments are described in the dependent patent claims.

In one independent aspect of the present invention, a terminal device for participating in an electronic payment transaction system is provided. The terminal device comprises a secure hardware unit including a token storage and a control unit that is configured to participate in a token transaction. The terminal device comprises a storage unit for storing a lossy compressed list including list elements. Each list element represents or indicates one or more blocked secure hardware units within the electronic payment system. The terminal device comprises a processing unit that is operatively coupled with the secure hardware unit. The processing unit is configured, before or during a token transaction with a further secure hardware unit within the electronic payment system, to determine whether the further secure hardware unit is marked as blocked based on a list element within the lossy compressed list. The processing unit is further configured, in case the further secure hardware unit is marked as blocked, to determine a risk value for executing the token transaction with the further secure hardware unit, and to execute the token transaction if the risk value is determined to be acceptable.

In one further independent aspect of the present invention, an electronic payment transaction system is provided. The electronic payment transaction system comprises a plurality of terminal devices of which at least one terminal device is configured according to an aspect of the present invention. The electronic payment transaction system comprises a secure onboarding unit which is configured to provide a lossy compressed list including list elements. Each list element indicates one or more blocked secure hardware units. The electronic payment transaction system may comprise a token reference register for storing references to token transactions between two terminal devices of the plurality of terminal devices.

In one further independent aspect of the present invention, a method for securing a token transaction in an electronic payment transaction system is provided. The method is to be executed in a processing unit of a terminal device, preferably acting in a payee role. The method comprises: receiving an identifier, e. g., ID, of a further secure hardware unit; determining whether the further secure hardware unit is marked as blocked based on comparing the identifier against list elements of the lossy compressed list; in case the further secure hardware unit is marked as blocked, determining a risk value for executing the token transaction with the further secure hardware unit; and executing the token transaction if the risk value is determined to be acceptable, otherwise aborting the token transaction.

In one further independent aspect of the present invention, a method for securing a token transaction in an electronic payment transaction system is provided. The method is to be executed in a processing unit of a terminal device, preferably acting in a payee role. The method comprises: receiving a token or a token reference of a further secure hardware unit hosted by a further terminal device; determining whether the further secure hardware unit is marked as blocked based on a list element within the lossy compressed list; in case the further secure hardware unit is marked as blocked, determining a risk value for executing the token transaction with the further secure hardware unit based on the received token or token reference; and executing the token transaction if the risk value is determined to be acceptable, otherwise aborting the token transaction.

In a further independent aspect of the present invention, a non-transitory computer readable storage medium for tangibly storing computer program instructions capable of being executed by a processing unit is provided. The computer program instructions implement the steps according to a method according to any aspect of the present invention. The term "non-transitory computer readable storage medium" includes, without being limited to, magnetic or optical media, e. g., disks, hard drives, volatile or non-volatile media such as RAM.

The gist of the invention is to empower the terminal device to carry on with the payment transaction with the further terminal device if the further secure hardware unit of the further terminal device is likely to be trustworthy despite being - perhaps falsely - marked as blocked. In other words, the terminal device is configured to handle an exceptional situation in which determining whether the further secure hardware unit is marked as blocked based on a list element within the lossy compressed list results in a positive result. By handling the positive result, the terminal device may weigh up the risk of proceeding with the payment transaction with the further secure hardware unit being marked as blocked.

The risk value may be understood as a value that reflects a trustworthiness of the further secure hardware unit of the further terminal device. The risk value may indicate an acceptance rate or acceptance percentage for the payment transaction with the further terminal device. For instance, the risk value may be or include a measure of likelihood that the positive result for the further secure hardware unit being blocked is false. The risk value may be or include a confidence value that reflects the confidence that the further secure hardware unit is not blocked despite being marked as blocked.

The terminal device, the electronic payment transaction system and/or the method may further include one or more of the following features:
The terminal device and the further terminal device may consist of or include equal hardware, however, provide complementary functions to collaboratively conduct an electronic payment transaction.

The processing unit may be configured to instruct or request the secure hardware unit, in particular a control module of the secure hardware unit, to initiate an electronic payment transaction, also known as hardware payment transaction.

The secure hardware unit may also be referred to as a secure token transaction unit. The secure hardware unit may comprise a memory for storing a plurality of tokens, wherein each token is a monetary value token, preferably a central bank digital currency token. The secure hardware unit may further comprise a control module that is configured to negotiate a secure payment channel with a secure element of the further terminal device. The control module may be further configured to receive a token transferred from the further secure hardware unit of the further terminal device acting in the payer role to the secure hardware unit of the terminal device acting in the payee role.

A secure hardware unit (as described herein) may be or include a secure element, also referred to as secure wallet, secure token management unit; token wallet; and/or wallet may be used to locally manage token in the memory itself and/or to transform the tokens and to register the token in an electronic token transaction system. The token may be stored in a token storage that is also managed by the token wallet.

Each secure hardware unit may comprise one secure token transaction unit identifier, also referred to as identifier, ID, wallet-ID or wallet identification data. The secure token transaction unit identifier is assigned to a specific secure token transaction unit for uniquely identifying the secure token transaction unit in the electronic token transaction system. The secure token transaction unit identifier is preferably stored in the specific secure wallet.

The secure token transaction unit identifier may be generated at the unit that issues the secure hardware unit, such as a financial service provider unit or a central entity in the transaction system.

Alternatively, the secure token transaction unit identifier may be generated by an official authority, a secure token issuing unit, e.g., a central bank unit. In this case, the secure token transaction unit identifier may be received by control means of the secure hardware unit issuing unit or the secure register unit.

In one embodiment, the secure token transaction unit identifier is mandatory data to be transmitted between individual users in the electronic transaction system for direct exchange of tokens. This may be a system requirement to ensure high standard security and in such a case, the secure token transaction unit identifier is not only used to uniquely identify the secure token transaction unit, but also possible to eventually identify the "real" user by resolving the user information by using an additional secure register unit.

In one embodiment, the secure hardware unit may be or include a secure cryptographic device, e. g., as specified according to ISO 13491-1. The secure hardware unit may be or include a device that provides physically and logically protected cryptographic services and storage, and which can be integrated into a larger system, such as an automated teller machine (ATM) or point-of-sale (POS) terminal.

In one embodiment, the secure hardware unit may be a simple element, e. g., as specified in EP23020212.9. The secure hardware unit may have a lower security level than the secure element, in particular due to lacking a secure component such as a trusted execution environment (TEE), a hardware security module (HSM), a secure or tamper-proof storage unit, or a secure program code. In an offline scenario, a secure hardware unit being configured as simple element thus may only receive tokens, not send tokens, i. e., act as the payee role.

Each list element in the lossy compressed list may represent one or more identifiers of secure hardware unit(s) that is/are included in the blacklist of blocked secure hardware units. The processing unit may be configured to compare each list element of the lossy compressed list against the identifier of the further secure hardware unit, which the terminal device may get to know during initializing the token transaction. Each list element may be or include a hash value. The processing unit may be configured to generate a hash value of the identifier of the further secure hardware unit to directly compare the generated hash value against the list elements of the lossy compressed list, which is particularly useful if the list elements are hash values.

If the identifier of the further secure hardware unit matches an identifier being represented as list element in the lossy compressed list, the further secure hardware unit is recognized as blocked. However, due to the possibility of false positives within the lossy compressed list, the further secure hardware unit may actually not be blocked. In an online token transaction, the terminal device, or its secure hardware unit, may request a secure instance in the electronic payment transaction system to verify whether the further secure hardware unit is indeed blocked based on a complete blacklist.

The token transaction may be an offline token transaction. The terminal device may be offline while determining the risk value. In this scenario, the terminal device cannot reach the complete blacklist in its original state, i. e., with full values instead of the plurality of list elements, each of which indicating one or more blocked secure hardware units within the electronic payment system. Therefore, there is no option to verify or double-check whether the further secure hardware unit is indeed blocked.

The processing unit may be referred to as a rich execution environment (REE) providing a hugely extensible and versatile operating environment. The processing unit may be embedded into a trusted execution environment (TEE), e. g., certified by Global Platform. The processing unit may include a toolkit that is adapted to an interaction and/or a communication with the secure hardware unit.

According to some embodiments, the terminal device may act a payee role, i. e., expect a payment from the further terminal device, which may act a corresponding payer role. The (electronic) payment or token transaction may be initiated by a payment request of the secure hardware unit via the terminal device to the further secure hardware unit of the further terminal device.

According to some embodiments, the processing unit may be configured to receive the identifier of the further secure hardware unit of the further terminal device. The processing unit may configure a communication unit or interface of the terminal device to open / route a communication channel to a communication unit or interface of the further terminal device. The identifier may be transferred from the secure hardware unit of the further terminal device to the secure hardware unit of the terminal device during negotiating a secure (wallet-)channel for the subsequent token transfer via the communication channel between the participating terminal devices. The identifier may be stored in the memory of the secure hardware unit. The processing unit may be configured to access the received identifier stored in the secure hardware unit and thereby receive the identifier of the secure hardware unit of the further terminal device. Upon determining whether the further secure hardware unit is marked as blocked based on a comparison of the received identifier with the lossy compressed list, the processing unit may actively influence or hook into the channel negotiation. Alternatively, the processing unit may determine whether the further secure hardware unit is marked as blocked based on a comparison of the received identifier with the lossy compressed list after the channel negotiation. The functionality of the processing unit retrieving the identifier of the further secure hardware unit and/or checking whether the identifier of the further secure hardware unit is included in the lossy compressed list may be (each) provided within a dedicated Application Data Protocol Unit (APDU).

According to some embodiments, the processing unit may be further configured to determine the risk value based on a parameter value associated with the token transaction. The risk value may be acceptable if the parameter value is lower than or equal to a predefined threshold value. Preferably, the parameter value is or includes a monetary value of a received token during the token transaction. In other words, executing the token transaction may be always accepted if the parameter value is lower than or equal to a predefined threshold value, independently of whether the further secure hardware unit is recognized as blocked based on a list element within the lossy compressed list. This acceptance rule includes the risk that the further secure hardware unit is blocked, such that the received token transferred during the token transaction may be invalid.

According to some embodiments, the processing unit may be further configured to receive an acknowledgement of a token reference of the further secure hardware unit. The acknowledgement may have been generated upon verification of the token reference at a token reference register of the electronic payment transaction system. The acknowledgement may include a timestamp. The acknowledgement and/or the timestamp of the acknowledgement may be signed by an authority, e. g., the (secure) token reference register and/or a financial service provider, to prevent fake acknowledgements and timestamps provided through a malicious wallet. The processing unit may be configured to determine the risk value based on the acknowledgement. The risk value may be acceptable, if a timestamp of the acknowledgement includes a date and/or time after a predetermined point in time. The token reference may correspond to the token that is transferred during the token transaction. In some embodiments, the token reference may correspond to another token that is not transferred during the token transaction.

The acknowledgement may correspond to the token that is included in the token transaction. In other words, the secure hardware unit may first receive the token and its acknowledgement and then determine the risk value based on the acknowledgement corresponding to the received token.

According to some embodiments, the token reference may be a token reference of a token of the further secure hardware unit, the token being involved in the token transaction.

Preferably, the processing unit is configured to access and analyze the acknowledgement.

The processing unit may determine the risk value based on information included in the acknowledgment. In particular, the processing unit may determine a point in time at which a replacement request involving the token or the token reference has been signed by a secure register of the electronic payment transaction system, e. g. the secure token reference register. This point in time may be determined based on a timestamp included in the acknowledgement.

Preferably, the acknowledgement includes a proof history for the respective token or token reference. The processing unit may be configured to determine the risk value based on a length of the proof history and/or a gap in the proof history preceding the timestamp included in the acknowledgement. The length of the proof history and/or the gap in the proof history preceding the (latest) timestamp included in the acknowledgement may correspond to parameter values associated with the token transaction, for which predetermined threshold values may be set.

According to some embodiments, the terminal device may further include a user interface operatively coupled to the processing unit. The processing unit may be configured to receive the predefined threshold value and/or the predetermined point in time through the user interface. The user interface may be configured as a touch display of the terminal device.

According to some embodiments, the control unit of the secure hardware unit may be further configured to obtain a certificate of the further secure hardware unit during negotiating a secure channel for a token transmission. The processing unit may be further configured: to request the certificate from the secure hardware unit; and to determine the risk value based on the certificate. The risk value may be acceptable if the certificate is valid.

The processing unit may be configured to receive the certificate of the secure hardware unit of the further terminal device. The certificate may be transferred from the secure hardware unit of the further terminal device to the secure hardware unit of the terminal device during negotiating a secure (wallet-)channel for the subsequent token transfer via the communication channel between the participating terminal devices. The certificate may be stored in the memory of the secure hardware unit. The processing unit may be configured to access the received certificate stored in the secure hardware unit and thereby receive the certificate of the secure hardware unit of the further terminal device. Thereby, the processing unit may actively influence or hook into the channel negotiation. This functionality of the processing unit may be provided within a dedicated Application Data Protocol Unit (APDU).

The certificate may include an online certificate status protocol - OCSP - staple, preferably signed by a financial service provider, due to security aspects. The processing unit may be further configured to determine the risk value based on the OCSP staple, i. e., determine whether the certificate is valid based on the OCSP staple. This functionality enables a faster check of the validity of the certificate of the further secure hardware unit, however, embedding OCSP stapling into token transactions is non-trivial as it further requires generating and signing of the OCSP staples.

According to some embodiments, the processing unit may be further configured to mark a received token of the further secure hardware element as risky in case the risk value is not acceptable. The received token marked as risky may indicate that the received token may not be used in (any) subsequent token transactions. To mark the received token as risky may be a measure of a tamper evidence, i. e., a measure of providing evidence that it has been tried to participate in an electronic payment transaction using an invalid token. The processing unit may be further configured to cancel the token transaction.

According to some embodiment, the lossy compressed list of has values indicating blocked secure hardware units within the electronic payment system may be generated using at least one of a bloom filter, a quotient filter and a Cockoo filter.

According to some embodiments, the terminal device may be or includes a point-of-sales (POS) terminal, an automated teller machine (ATM) or an un-attended payment terminal (UPT).

The terminal device may be a financial terminal and may include a number of components, e. g.: a PIN Entry Device (PED), a printer, communications devices, a customer/merchant interface, an acquirer application, an IC Card reader and/or a magnetic stripe reader. These components may be combined and configured in various fashions, dependent upon requirements.

Preferably, the electronic payment transaction system may comprise a token register, in particular token reference register, for storing token, token transactions or references to token transactions between two terminal devices of the plurality of terminal devices. The token register or token reference register provides further security for token transactions within the electronic payment transaction system, in particular due to online verification services of (received) tokens. The use of token references over tokens has the further advantage of reducing communication of sensitive information such as the private key associated with a respective token.

In the electronic payment system, different types of terminal devices may coexist. Terminal devices of a first group of terminal devices may be configured to always be online and therefore are empowered to always check the identifier of the further secure hardware unit against the complete blacklist hosted by a dedicated system service, e. g., the secure onboarding unit. These terminal devices may not suffer false positive detections of blocked further secure hardware units. Terminal devices of a second group of terminal devices may include a sufficiently large memory capacitance to always download the full blacklist without needing to hash the identifiers of the blocked secure hardware units. The terminal devices of the second group may not encounter false positive detection of blocked further secure hardware units. Terminal devices according to a third group may correspond to the terminal device according to aspects of the preset invention, which may encounter false positive detection of blocked further secure hardware units. Since the handling of positive detection results in terminal devices according to the third group is performed locally, i. e., within the processing unit of the terminal device, no interference between terminal devices of the different groups is to be expected. Thus, terminal devices of the first, second and third group may coexist in the electronic payment transaction system, i. e., participate in common token transactions.

The method step for determining the risk value may further comprise determining the risk value based on a parameter value associated with the token transaction. The risk value may be acceptable if the parameter value is lower than or equal to a predefined threshold value. Preferably, the parameter value is or includes a monetary value of a received token during the token transaction.

The method step for determining the risk value may further comprise receiving an acknowledgement of a token reference of the further secure hardware unit. The acknowledgement may have been generated upon verification of the token reference at a token reference register of the electronic payment transaction system. The acknowledgement may include a timestamp. The acknowledgement and/or the timestamp may be signed by an authority, e. g., the (secure) token reference register and/or a financial service provider. The method step for determining the risk value may further comprise determining the risk value based on the acknowledgement. The risk value may be acceptable, if a timestamp of the acknowledgement includes a date and/or time after a predetermined point in time. The date and/or time may be encoded as timestamps.

The method step for determining the risk value may further comprise obtaining, by the secure hardware unit, a certificate of the further secure hardware unit during negotiating a secure channel for a token transmission. The method step for determining the risk value may further comprise requesting, by the processing unit, the certificate from the secure hardware unit; and determining the risk value based on the certificate. The risk value may be acceptable if the certificate is valid.

The further secure hardware unit may be embodied as hardware wallet, e. g. a card, in particular a smart card, and/or as hosted-wallet, e. g., hosted by a further terminal device.

In the following, the invention or further embodiments and advantages of the invention are explained in more detail based on drawings, wherein the drawings describe only embodiments of the invention. Identical components in the drawings are given the same reference signs. Elements drawn with dashed lines are considered as optional elements.

The drawings are not to be regarded as true to scale, and individual elements of the drawings may be shown in exaggeratedly large or exaggeratedly simplified form.
Fig. 1 shows a schematic sequence diagram for conducting an electronic payment transaction according to prior art.
Fig. 2 shows an exemplary embodiment of a terminal device according to an aspect of the invention.
Fig. 3 shows an exemplary embodiment of a terminal device in direct communication with a further terminal device according to an aspect of the invention.
Fig. 4 shows an exemplary embodiment of an electronic payment transaction system including at least one terminal device according to an aspect of the invention.
Fig. 5 shows a schematic sequence diagram for conducting a payment transaction according to an aspect of the invention.

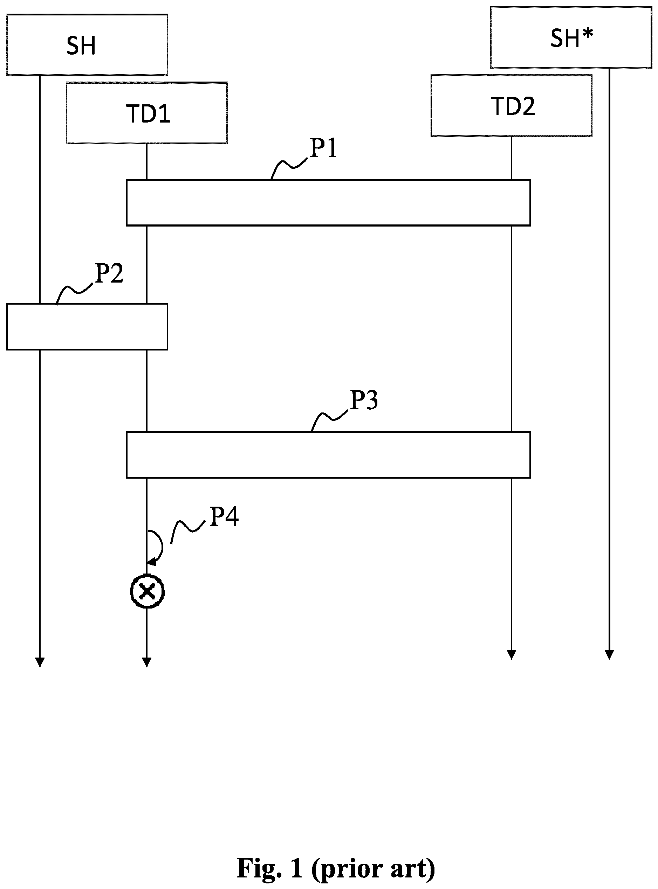

In Fig. 1, a simplified sequence diagram for a payment transaction according to prior art is depicted. In the payment transaction, a (first) terminal device TD1 including a secure hardware unit SH (or first wallet) and a further (second) terminal device TD2, including a further secure hardware unit SH* (or second wallet) participate. Structurally, the secure hardware unit SH and the further secure hardware unit SH* may overlap or be identical. However, as opposed to the secure hardware unit SH, the further secure hardware unit SH* may be marked as blocked according to a lossy compressed list including list elements, each of which representing identifiers of one or more blocked secure hardware units. In the example of Fig. 1, the terminal device TD1 acts in the payee role, i. e., expecting a payment via a token from the further terminal device TD2 hosting the further secure hardware unit SH*. In another scenario, the terminal device TD1 may also act in the payer role, i. e., the further terminal device TD2 hosting the further secure hardware unit SH* may act in the payee role.

The payment transaction is typically initiated by step P1 according to which the terminal device TD1, in particular its processing unit, receives payment details such as an origin number, e. g., the identifier of the further secure hardware unit SH of the further terminal device TD2, and the amount of the transaction.

In a second step P2, the terminal device TD1 may forward the payment details to its secure hardware unit SH, i. e. terminal device internal. Alternatively, the secure hardware unit SH may receive the payment details in the first step P1, wherein in the second step P2, the terminal device TD1 retrieves or requests some of the payment details from the secure hardware unit SH.

In a subsequent third step P3, the first terminal device TD1 enables its secure hardware unit SH to establish a contact with the secure hardware unit SH corresponding to the origin number, e.g., using bluetooth, Wifi or the internet protocol. The established contact or channel may be also referred to as wallet channel. The wallet channel may be linked via respective communication interfaces of the involved terminal devices TD1 and TD2.

In the example of Fig. 1, after having established a connection in step P3, the terminal device TD1 may be configured to check whether the origin number corresponds to a blocked secure hardware unit. Assuming an offline scenario, the terminal device TD1 may check the origin number against a lossy compressed list including a plurality of list elements, which is prone to false positives, as described above. In the example of Fig. 1, the further secure hardware unit SH* may be marked as blocked based on the lossy compressed list. Accordingly, the terminal device TD1 cancels the token transaction, even in case the further secure hardware unit SH* was actually not blocked.

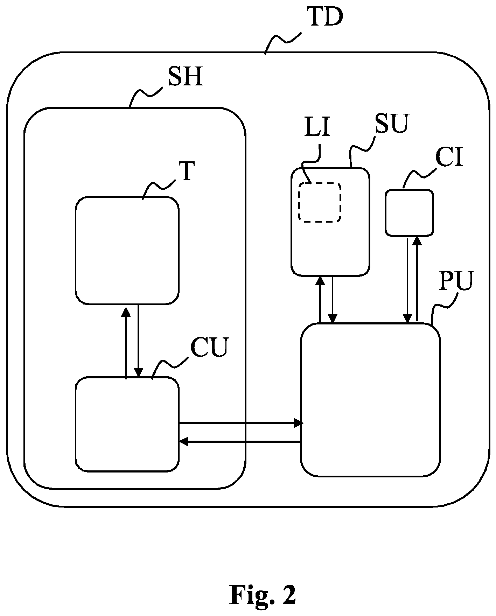

In Fig. 2, an exemplary embodiment of a terminal device according to an aspect of the invention is schematically depicted.

The terminal device TD according to the example of Fig. 2 includes a secure hardware unit SH, a processing unit PU, and optionally a communication interface CI. The processing unit PU is operatively coupled to the secure hardware unit SH and the communication interface CI.

The secure hardware unit SH of the terminal device TD according to the example of Fig. 2 includes a control unit CU and a storage unit SU. The storage unit may include a token storage unit T. The processing unit PU may be operatively coupled to the control unit CU of the secure hardware unit SH, i. e., send and receive data and/or commands to and/or from the control unit CU of the secure hardware unit SH.

In the storage unit SU, a lossy compressed list LI including a plurality of list elements may be stored. Each list element represents or indicates one or more blocked secure hardware units. Each list element may be or include a hash value that may indicate one or more blocked secure hardware unit. However, the list elements, e. g., hash values, may include false positives, i. e., indicate a secure hardware unit as blocked, although it is not blocked.

The processing unit PU is configured, before or during a token transaction with a further secure hardware unit SH* within the electronic payment system TS, to determine whether the further secure hardware unit HS* is marked as blocked based on a list element within the lossy compressed list LI.

To reduce the number of (unnecessary) cancellations of payment transactions, the processing unit PU is configured, in case the further secure hardware unit SH* is marked as blocked, to determine a risk value for executing the token transaction with the further secure hardware unit SH*, and to execute the token transaction if the risk value is determined to be acceptable.

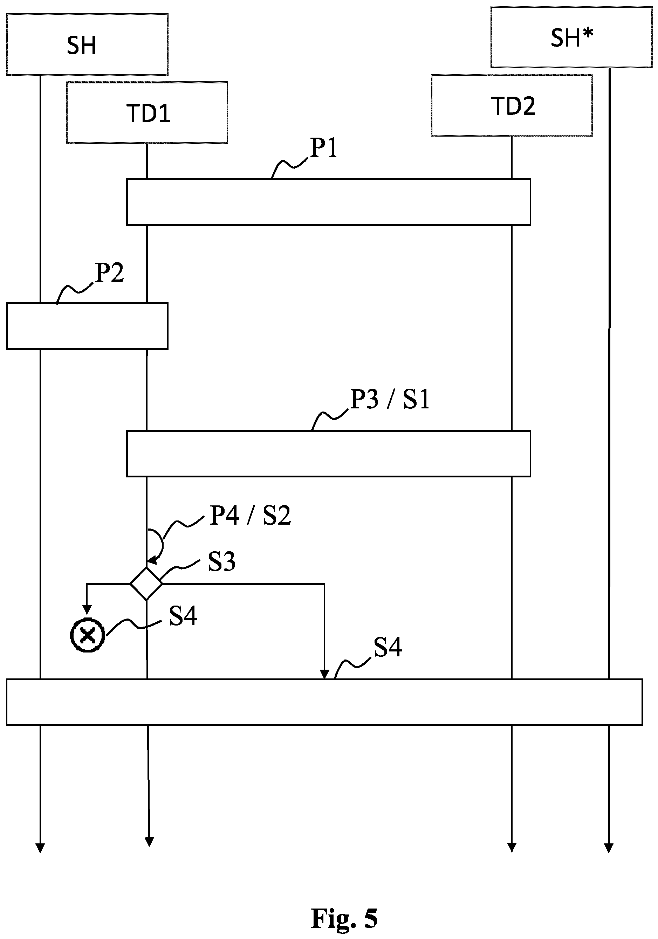

Various possibilities to determine whether the risk value is acceptable are discussed with respect to Fig. 5.

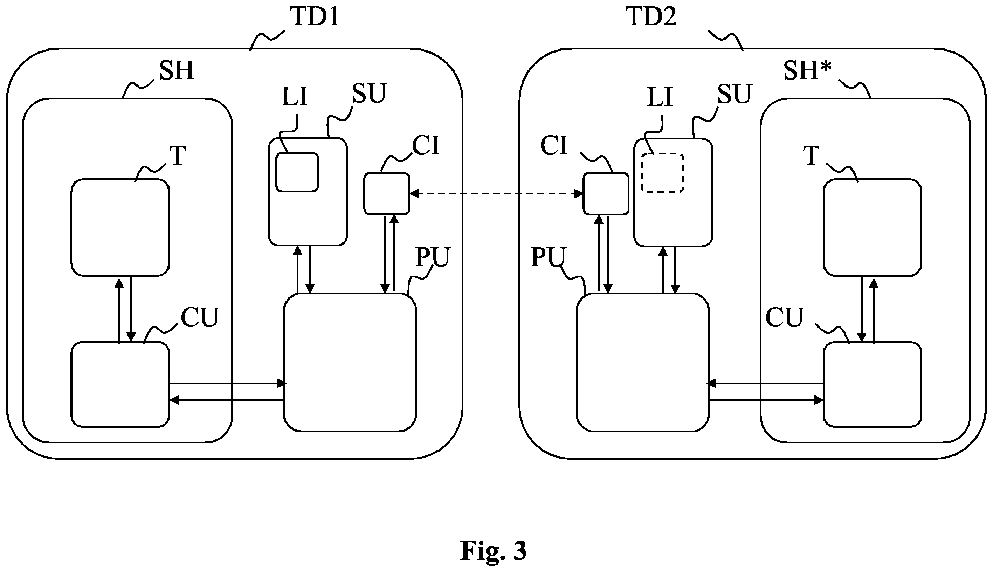

In Fig. 3, an exemplary embodiment of a terminal device in direct communication with a further terminal device according to an aspect of the invention is depicted.

The terminal device TD1 may act in a payee role. The terminal device TD1 may correspond to the exemplary embodiment of the terminal device TD described with respect to Fig. 2. The terminal device TD1 may be, e. g., a POS-terminal, an ATM or a UPT.

In the example of Fig. 3, the further terminal device TD2 may act in a payer role. More specifically, the further secure hardware unit SH*, either acting independently or, as shown in the example of Fig. 3, being hosted by the further terminal device TD2 may act in the payer role. The further secure hardware unit SH* may be determined to be blocked based on the lossy compressed list LI including a plurality of list elements. However, using a rule-based approach, the terminal device TD1 may determine that the further secure hardware transaction unit SH* is not blocked and continue with negotiating / establishing the wallet channel between the secure hardware unit SH and the further secure hardware unit SH*. In Fig. 3, the wallet channel is depicted by the dashed double arrow. Alternatively, the terminal device TD1 may determine that whether the further secure hardware transaction unit SH* is blocked after having established the wallet channel, e. g., based on a token received from the further secure hardware unit SH*.

In the payer role, the storage of the lossy compressed list LI is optional, however, recommended. If available, the further terminal device TD2 may also determine whether the secure hardware unit SH of the terminal device TD1, i. e., its transaction partner, is marked as blocked.

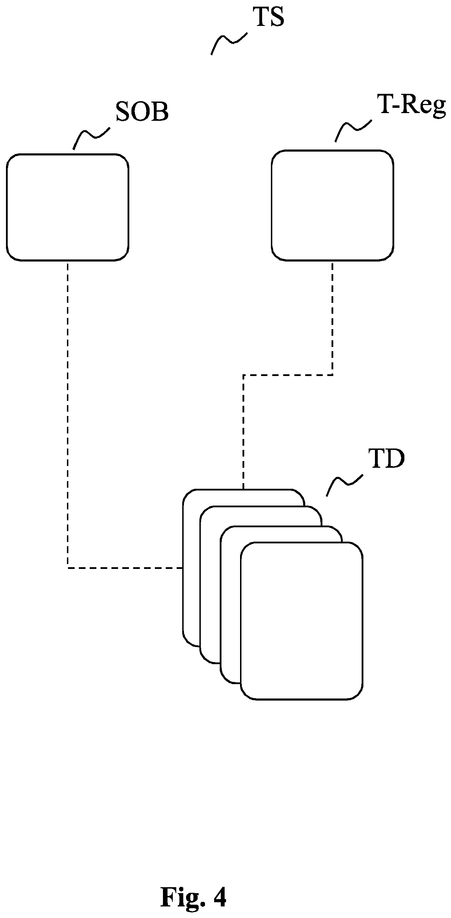

In Fig. 4, an exemplary embodiment of an electronic payment transaction system including at least one terminal device according to an aspect of the invention is depicted.

Some of the terminal device TD in the electronic payment transaction system TS of the example of Fig. 4 may store the lossy compressed list LI and determined based thereon whether its respective transaction partner includes a secure hardware unit that is marked as blocked. These terminal devices TD may determine, using the rule-based approach discussed further with respect to Fig. 5, whether the respective secure hardware unit is nevertheless trustworthy such that the payment transaction may be continued instead of cancelled. The more terminal devices are configured according to an aspect of the present invention, the less payments are unnecessarily cancelled within the electronic payment transaction system TS. Thus, a communication overhead associated with unnecessarily cancelling payment transactions may be reduced.

The electronic payment transaction system TS of the example in Fig. 4 may further include a token reference register T-Reg, which is configured to verify the validity of tokens, in particular by registering respective token transactions based on token references included therein. The token reference register T-Reg may enhance the security of token transactions within the electronic payment transaction system TS.

The electronic payment transaction system TS of the example of Fig. 4 further includes a secure onboarding unit SOB. The secure onboarding unit SOB may be configured to manage, i. e., update and/or maintain the blacklist of blocked secure hardware units. The secure onboarding unit SOB may be configured to generate the lossy compressed list LI including a plurality of list elements, wherein each list element represents one or more blocked secure hardware units, e. g., by storing representations of the blocked secure hardware units in one of a Bloom filter, a quotient filter or a Cuckoo filter. The secure onboarding unit SOB may be configured to update the lossy compressed list LI and/or to provide updates of the lossy compressed list LI to the terminal devices TD in the electronic payment transaction system TS. For instance, the secure onboarding unit SOB may provide incremental updated for the lossy compressed list LI. Each list element of the lossy compressed list LI may be or include a hash value.

In Fig. 5, a schematic sequence diagram for initiating a payment transaction according to an aspect of the invention is depicted.

The sequence diagram of Fig. 5 is an extension of the sequence diagram of Fig. 1. Step P3 may correspond to a first step S1 according to the invention. That is, in the first step S1, an identifier of a further secure hardware unit SH* may be received. In the example of Fig. 5, the further secure hardware unit SH* may be hosted by a further terminal device TD2,i. e., implemented as a hosted-wallet. Likewise, the further secure hardware unit SH* may be implemented as hardware-wallet (not shown), i. e., without being hosted by a terminal device.

In the second step S2, the terminal device TD1 determines whether the further secure hardware unit SH* participating in the payment transaction is marked as blocked, based on comparing the identifier against list elements of the lossy compressed list LI. This list LI, however, inherently includes false positives, such that not every secure hardware unit that is recognized as blocked actually is blocked within the electronic transaction system TS.

The method further includes a third step S3, which comprises, in case the further secure hardware unit SH* is recognized as blocked, determining, by the processing unit PU of the terminal device TD1, a risk value for executing the token transaction with the further secure hardware unit SH*.

In a first example, the risk value may be determined based on a parameter value associated with the token transaction, wherein the risk value is acceptable if the parameter value is lower than or equal to a predefined threshold value. For instance, the parameter value is or includes a monetary value of a received token during the token transaction. That is, up to a certain threshold of monetary value, the token transaction may be always executed even in case the further secure hardware unit SH* is marked as blocked based on the lossy compressed list LI.

In a second example, the risk value may be determined based on an acknowledgement of a token reference received from the further secure hardware unit SH*. The acknowledgement may have been generated upon verification of the token reference at a token reference register T-Reg of the electronic payment transaction system TS. This approach may include determining that the risk value is acceptable, if a timestamp of the acknowledgement includes a date and/or time after a predetermined point in time.

In a third example, the risk value may be determined based on a certificate obtained from the further secure hardware unit SH* during negotiating a secure channel for a token transmission. This approach may include requesting, by the processing unit PU of the terminal device TD1, the certificate from the secure hardware unit SH. The risk value may be considered acceptable if the certificate is valid.

In a fourth step S4, in case the risk value is determined to be acceptable, the payment transaction may continue with a secured (encrypted) token transmission. Otherwise, the payment transaction may be stopped, cancelled, aborted, and preferably reported. Preferably, the fourth step S4 further includes marking a received token of the further secure hardware element SH* as risky in case the risk value is not acceptable. The received token marked as risky indicates that the received token may not be used in subsequent token transactions.

### Reference signs

- TD, TD1: Terminal device
- TD2: Further terminal device
PU Processing unit
SU Storage unit
CI Communication interface
LI Lossy compressed list including a plurality of list elements
- SH: Secure hardware unit
- SH*: Further secure hardware unit
CU Control unit
T Token storage
- TS: Electronic payment transaction system
- SOB: Secure onboarding unit
- T-Reg: Token reference register

## Claims

1. A terminal device (TD, TD1) for participating in an electronic payment transaction system (TS), the terminal device (TD, TD1) comprising:
a secure hardware unit (SH) including a token storage (T) and a control unit (CU) that is configured to participate in a token transaction;
a storage unit (SU) for storing a lossy compressed list (LI) including a plurality of list elements, wherein each list element represents one or more blocked secure hardware unit(s) within the electronic payment system (TS); and
a processing unit (PU) that is operatively coupled with the secure hardware unit (SH), and configured:
before or during a token transaction with a further secure hardware unit (SH*) within the electronic payment system (TS), to determine whether the further secure hardware unit (SH*) is marked as blocked based on a list element within the lossy compressed list (LI);
in case the further secure hardware unit (SH*) is marked as blocked, to determine a risk value for executing the token transaction with the further secure hardware unit (SH*), and to execute the token transaction if the risk value is determined to be acceptable.

2. The terminal device (TD, TD1) of claim 1, wherein the token transaction is an offline token transaction and/or wherein the terminal device (TD, TD1) is offline while determining the risk value.

3. The terminal device (TD, TD1) of any of the preceding claims, wherein the processing unit is further configured to:
determine the risk value based on a parameter value associated with the token transaction, wherein the risk value is acceptable if the parameter value is lower than or equal to a predefined threshold value, wherein the parameter value preferably is or includes a monetary value of a received token during the token transaction.

4. The terminal device (TD, TD1) of any of the preceding claims, wherein the processing unit is further configured to:
receive an acknowledgement of a token reference of the further secure hardware unit (SH*), wherein the acknowledgement has been generated upon verification of the token reference at a token reference register (T-Reg) of the electronic payment transaction system (TS); and
determine the risk value based on the acknowledgement, wherein the risk value is acceptable, if a timestamp of the acknowledgement includes a date and/or time after a predetermined point in time.

5. The terminal device (TD, TD1) according to claim 4, wherein the token reference is a token reference of a token of the further secure hardware unit (SH*), the token being involved in the token transaction.

6. The terminal device (TD, TD1) of any of claims 3-5, further comprising a user interface operatively coupled to the processing unit (PU), wherein the processing unit (PU) is configured to receive the predefined threshold value and/or the predetermined point in time through the user interface.

7. The terminal device (TD, TD1) of any of the preceding claims, wherein the control unit (CU) of the secure hardware unit (SH) is further configured to obtain a certificate of the further secure hardware unit (SH*) during negotiating a secure channel for a token transmission; and wherein the processing unit (PU) is further configured:
to request the certificate from the secure hardware unit (SH); and
to determine the risk value based on the certificate, wherein the risk value is acceptable if the certificate is valid.

8. The terminal device (TD, TD1) of claim 7, wherein the certificate includes an online certificate status protocol - OCSP - staple, preferably signed by a financial service provider, wherein the processing unit (PU) is further configured to determine the risk value based on the OCSP staple.

9. The terminal device (TD, TD1) of any of the preceding claims, wherein the processing unit (PU) is further configured to:
mark a received token of the further secure hardware element (SH*) as risky in case the risk value is not acceptable, wherein the received token marked as risky indicates that the received token may not be used in subsequent token transactions; and
cancel the token transaction.

10. The terminal device (TD, TD1) according to any of the preceding claims, wherein the lossy compressed list (LI) of blocked secure hardware units within the electronic payment system (TS) is generated using at least one of a bloom filter, a quotient filter and a Cockoo filter and/or wherein the each one of the plurality of list elements is a hash value.

11. The terminal device (TD, TD1) according to any of the preceding claims, wherein the terminal device (TD, TD1) is or includes a point-of-sales, e. g., POS, terminal, an automated teller machine, e. g., ATM.

12. An electronic payment transaction system (TS) comprising:
a plurality of terminal devices (TD, TD1, TD2) of which at least one terminal device (TD, TD1) is configured according to any of the preceding claims;
a secure onboarding unit (SOB) which is configured to provide a lossy compressed list (LI) including a plurality of list elements, wherein each list element represents one or more blocked secure hardware unit(s); and
preferably, a token reference register (T-Reg) for storing references to token transactions between two terminal devices (T1, T2) of the plurality of terminal devices (TD, TD1, T2).

13. A method for securing a token transaction in an electronic payment transaction system (TS), the method to be executed in a processing unit (PU) of a terminal device (TD, TD1), preferably acting a payee role, the method comprising:
receiving an identifier, e. g., ID, of a further secure hardware unit (SH*);
determining whether the further secure hardware unit (SH*) is marked as blocked based on comparing the identifier against list elements of the lossy compressed list (LI);
in case the further secure hardware unit (SH*) is marked as blocked, determining a risk value for executing the token transaction with the further secure hardware unit (SH*); and
executing the token transaction if the risk value is determined to be acceptable, otherwise aborting the token transaction.

14. The method of claim 13, wherein determining the risk value further comprises:
determining the risk value based on a parameter value associated with the token transaction, wherein the risk value is acceptable if the parameter value is lower than or equal to a predefined threshold value, wherein the parameter value preferably is or includes a monetary value of a received token during the token transaction; and/or
receiving an acknowledgement of a token reference of the further secure hardware unit (SH*), wherein the acknowledgement has been generated upon verification of the token reference at a token reference register of the electronic payment transaction system (TS); and determining the risk value based on the acknowledgement, wherein the risk value is acceptable, if a timestamp of the acknowledgement includes a date and/or time after a predetermined point in time; and/or
obtaining, by the secure hardware unit (SH), a certificate of the further secure hardware unit (SH*) during negotiating a secure channel for a token transmission;
requesting, by the processing unit (PU), the certificate from the secure hardware unit (SH); and determining the risk value based on the certificate, wherein the risk value is acceptable if the certificate is valid.

15. A non-transitory computer readable storage medium for tangibly storing computer program instructions capable of being executed by a processing unit (PU), the computer program instructions implementing the steps of any of the preceding method claims 13 or 14.
